# EUROPÄISCHE PATENTSCHRIFT

(11) **EP 0 720 723 B1**
(45) Veröffentlichungstag und Bekanntmachung des Hinweises auf die Patenterteilung: **01.10.2003**
(21) Anmeldenummer: 95924176.1
(22) Anmeldetag: 06.07.1995
(51) Int. Cl.: G01F 1/68

(54) **VORRICHTUNG ZUR MESSUNG DER MASSE EINES STRÖMENDEN MEDIUMS**
DEVICE FOR MEASURING THE MASS OF A FLOWING MEDIUM
DISPOSITIF PERMETTANT DE MESURER LE D D'UN MILIEU EN ECOULEMENT

(30) Priorität: 22.07.1994 DE 4426101
(43) Veröffentlichungstag der Anmeldung: 10.07.1996
(73) Patentinhaber: ROBERT BOSCH GMBH, 70442 Stuttgart (DE)
(72) Erfinder: RILLING, Heinz, D-71735 Eberdingen (DE); LEHENBERGER, Stefan, D-71636 Ludwigsburg (DE)
(86) Internationale Anmeldenummer: DE9500878
(87) Internationale Veröffentlichungsnummer: WO96003621

(56) Entgegenhaltungen:
- DE-A- 3 638 138
- DE-A- 4 334 090
- US-A- 3 196 679
- US-A- 4 523 461

## Beschreibung

### Stand der Technik

Die Erfindung geht aus von einer Vorrichtung zur Messung der Masse eines strömenden Mediums nach der-Gattung des Anspruchs 1. Es ist schon eine Vorrichtung bekannt (DE-OS 36 38 138), bei der ein sogenanntes Heißfilm-Sensorelement in ein strömendes Medium eingebracht ist, das zur Messung der Masse des strömenden Mediums einen temperaturabhängigen Sensorbereich besitzt, der sich aus einzelnen Widerstandsschichten-zusammensetzt, die auf einem plattenförmigen Substrat aufgebracht sind und die wenigstens einen Heizwiderstand und wenigstens einen temperaturabhängigen Meßwiderstand umfassen. Zur Messung wird der Meßwiderstand auf eine weit oberhalb der Temperatur des strömenden Mediums liegende Übertemperatur gehalten, so daß dieser im wesentlichen aufgrund von Konvektion, abhängig von der vorbeiströmenden Masse des strömenden Mediums eine bestimmte Wärmemenge an das strömende Medium abgibt. Der Heizwiderstand dient bekannterweise zur Aufrechterhaltung der konstanten Übertemperatur des Meßwiderstandes und ist in möglichst gutem Wärmekontakt zum Meßwiderstand angeordnet, um dessen Temperatur möglichst schnell zu erhöhen. Der Meßwiderstand hat einen von der Temperatur abhängigen Widerstandswert, so daß eine Änderung der Übertemperatur eine Änderung seines Widerstandswertes zur Folge hat, wobei eine mit dem Meßwiderstand und mit dem Heizwiderstand verbundene Regelschaltung verstimmt wird. Die Regelschaltung ist beispielsweise in Form einer brückenähnlichen Widerstandsmeßschaltung ausgebildet, die bei einer Verstimmung durch den Meßwiderstand den Heizstrom oder die Heizspannung des Heizwiderstandes ändert, um so die Übertemperatur des Meßwiderstandes konstant zu halten, wobei der zur Aufrechterhaltung der Übertemperatur des Meßwiderstandes erforderliche Heizstrom oder die Heizspannung des Heizwiderstandes ein Maß für die Masse des strömenden Mediums ist. Wie im eingangs genannten Stand der Technik entnehmbar ist, besitzt das Substrat noch einen weiteren Widerstand, der im folgenden als Mediumtemperaturwiderstand bezeichnet wird und der mittels aus dem Substrat ausgenommener Schlitze thermisch entkoppelt zum Heiz- und Meßwiderstand auf dem Substrat angeordnet ist. Der Mediumtemperaturwiderstand hat einen von der Temperatur abhängigen Widerstandswert und ist Teil der Regelschaltung, die gewährleistet, daß sich Änderungen der Temperatur des strömenden Mediums nicht auf die Meßgenauigkeit der Vorrichtung auswirken. Aufgrund der räumlichen Nähe des Mediumtemperaturwiderstandes zum Heizwiderstand ist eine thermische Beeinflussung jedoch nicht vollständig auszuschließen, da sich trotz der aus dem Substrat ausgenommenen Schlitze innerhalb des Substrats Wärmeströme ergeben können, die beispielsweise über eine Halterung des Heißfilm-Sensorelements zum Mediumtemperaturwiderstand fließen können., so daß dieser nicht genau die Temperatur des strömenden Mediums annimmt. Darüber hinaus haben die vom Heizwiderstand nicht dem strömenden Medium zugeführten Wärmeströme die Wirkung, daß die Ansprechzeit der Vorrichtung auf Änderungen der Temperatur des strömenden Mediums verlängert wird. Außerdem kann es bei pulsierender Strömung mit teilweiser Rückströmung am Heißfilm-Sensorelement vorkommen, daß erwärmtes Medium vom Heizwiderstand zum Mediumtemperaturwiderstand gelangt, sö daß dieser fälschlicherweise eine vom Heizwiderstand erhöhte Temperatur des strömenden Mediums bestimmt.

### Vorteile der Erfindung

Die erfindungsgemäße Vorrichtung mit den kennzeichnenden Merkmalen des Anspruch 1 hat gegenüber dem Stand der Technik den Vorteil, daß die Vorrichtung eine erhöhte Meßgenauigkeit und verkürzte Ansprechzeit aufweist.

Durch die in den Unteransprüchen aufgeführten Maßnahmen sind vorteilhafte Weiterbildungen und Verbesserungen der im Anspruch 1 angegebenen Vorrichtung möglich.

### Zeichnung

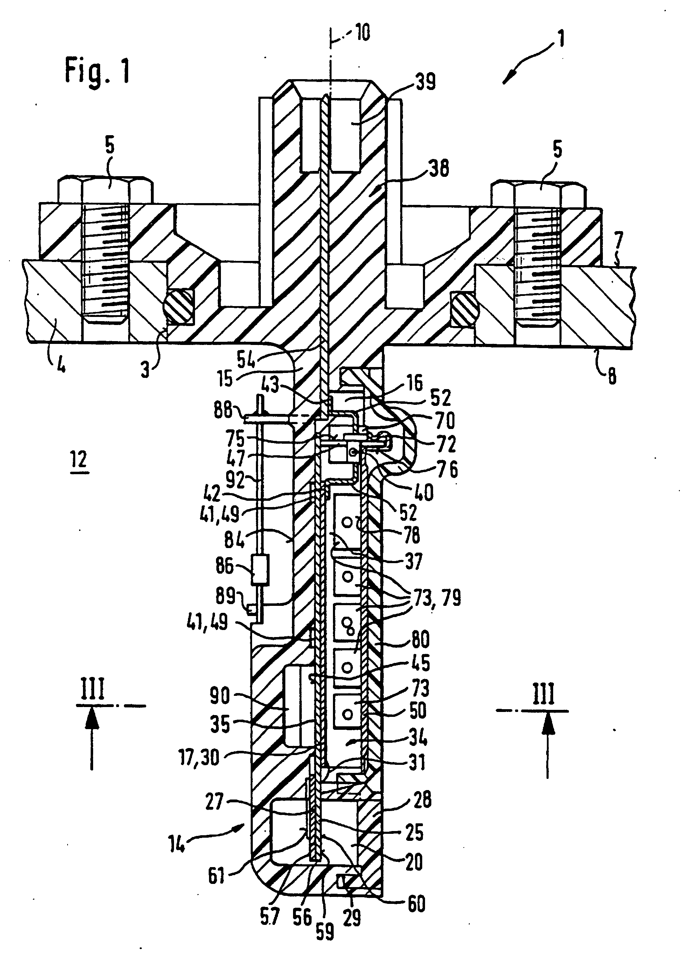

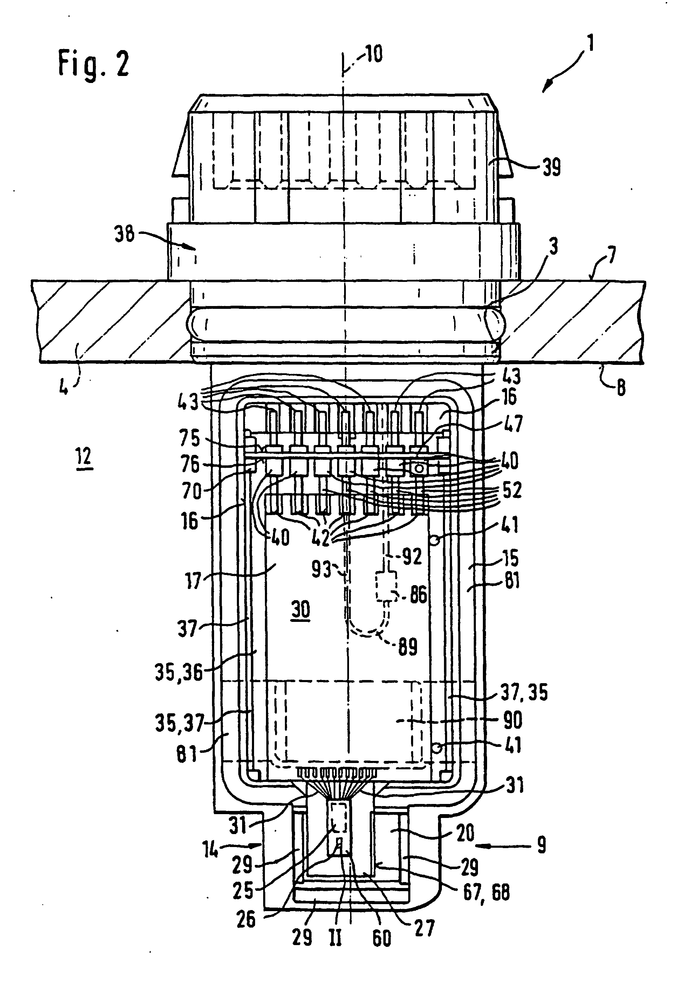

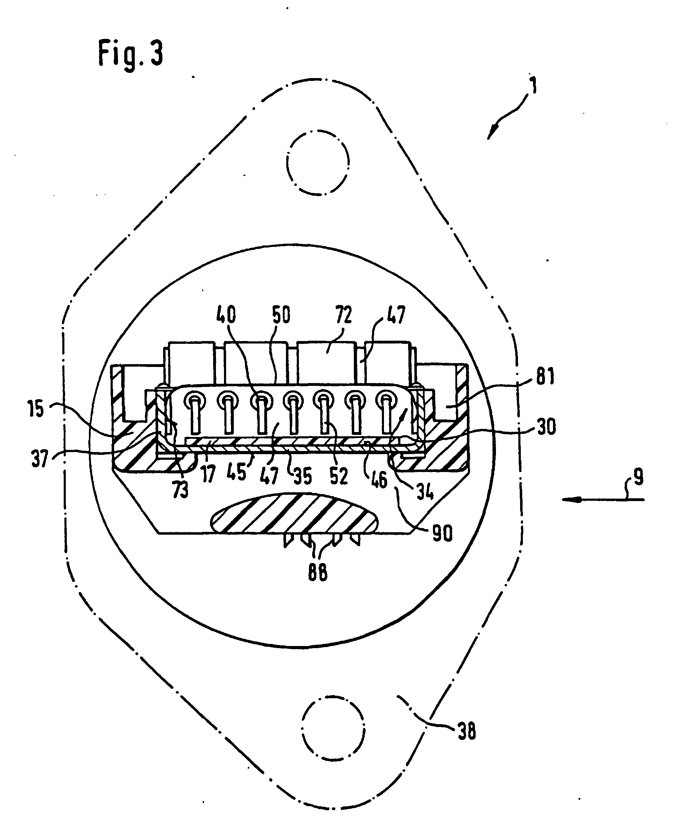

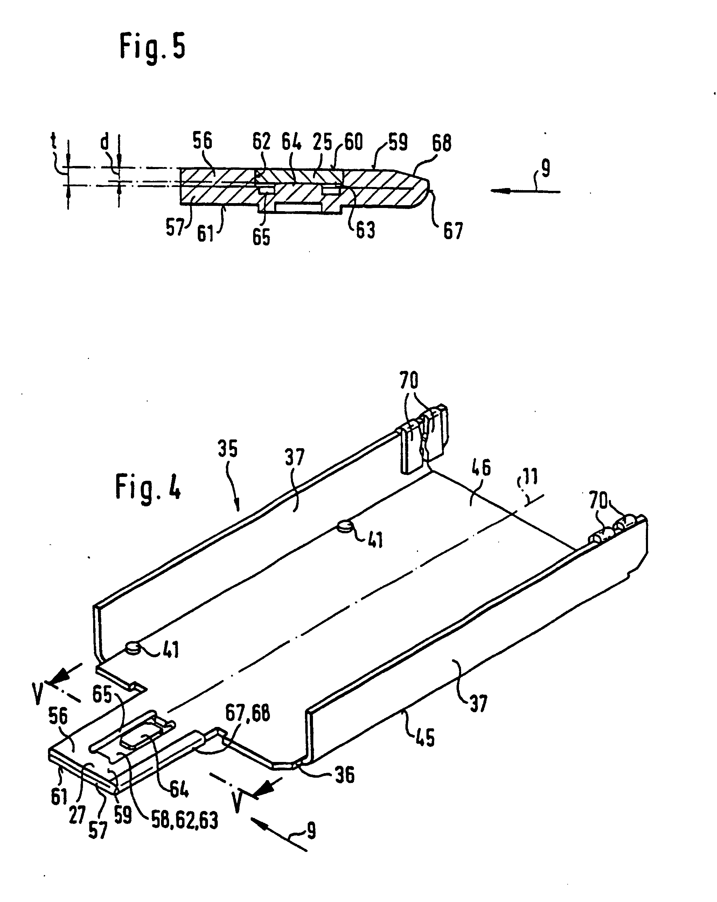

Ein Ausführungsbeispiel der Erfindung ist in der Zeichnung vereinfacht dargestellt und in der nachfolgenden Beschreibung näher erläutert. Es zeigen Figur 1 in Seitenansicht einen Schnitt durch eine erfindungsgemäß ausgestaltete Vorrichtung, Figur 2 eine Draufsicht der erfindungsgemäß ausgestalteten Vorrichtung, Figur 3 einen Schnitt entlang der Linie III-III in Figur 1, Figur 4 eine perspektivische Einzeldarstellung eines Bodengehäuses der erfindungsgemäß ausgestalteten Vorrichtung, Figur 5 einen Schnitt entlang einer Linie V-V in Figur 4.

### Beschreibung des Ausführungsbeispiels

Die in Figur 1 in Seitenansicht dargestellte, erfindungsgemäße Vorrichtung 1 ist zur Messung der Masse eines strömenden Mediums, insbesondere der Ansaugluftmasse einer nicht näher dargestellten Brennkraftmaschine vorgesehen. Die Vorrichtung 1 hat vorzugsweise eine schlanke zylindrische Form, die sich entlang einer mittig durch die Vorrichtung 1 hindurchgehenden Längsachse 10 erstreckt. Die Vorrichtung 1 ist durch eine Öffnung 3 einer Wandung 4, beispielsweise eines Ansaugrohres hindurchgeführt, in dem von der Brennkraftmaschine aus der Umgebung angesaugte Luft strömt. Mittels zweier Schraubverbindungen 5 ist die Vorrichtung 1 an einer Außenfläche 7 der Wandung 4 steckbar befestigt, die mit einer Innenfläche 8 einen Strömungsquerschnitt 12 begrenzt, in dem senkrecht zur Zeichenebene der Figur 1 und in die Zeichenebene hinein das Medium strömt. Die Vorrichtung 1 besitzt ein langgestrecktes Grundgehäuse 15 aus Kunststoff, an dessen freiem Endbereich 14 ein Meßkanal 20 ausgebildet ist, der mit einem etwa rechteckförmigen Querschnitt etwa in die Mitte des Strömungsquerschnitts 12 hineinragt und sich etwa parallel zur Strömungsrichtung erstreckt, um vom strömenden Medium durchströmt zu werden. Innerhalb des Meßkanals 20 ist in Richtung der Längsachse 10 ein Sensorelement 25 untergebracht, das eine plattenförmige Form besitzt und das mit seiner größten Oberfläche 60 in etwa parallel zum in die Zeichenebene der Figur 1 hineinströmenden Medium ausgerichtet ist. Die Strömungsrichtung des Mediums ist in den Figuren 2 bis 5 durch entsprechende Pfeile 9 gekennzeichnet und verläuft dort von rechts nach links. Der Meßkanal 20 wird teils vom Grundgehäuse 15 und teils von einem auf das Grundgehäuse 15 aufsetzbaren, beispielsweise aus Kunststoff hergestellten Verschlußdeckel 28 begrenzt, der in eine am Endbereich 14 des Grundgehäuses 15 vorgesehene Nut 29 einsteckbar ist. Der Verschlußdeckel 28 ist der besseren Übersicht wegen in der Figur 2 nicht dargestellt.

Das Sensorelement 25 kann durch Ausätzen eines Halbleiterkörpers, beispielsweise eines Siliziumwafers, in sogenannter mikromechanischer Bauweise hergestellt werden und besitzt einen Aufbau, der zum Beispiel der DE-OS 42 19 454 entnehmbar ist und der deshalb nicht näher geschildert wird. Das Sensorelement 25 hat einen ebenfalls durch Ausätzen entstandenen, membranförmigen Sensorbereich 26, der, wie in der Figur 2, einer Draufsicht der Vorrichtung 1, dargestellt ist, von einer eingezeichneten Linie II begrenzt wird. Der Sensorbereich 26 hat eine Dicke, die nur wenige Mikrometer beträgt und besitzt mehrere, ebenfalls durch Ausätzen entstandene Widerstandsschichten, die wenigstens einen temperaturabhängigen Meßwiderstand und beispielsweise wenigstens einen Heizwiderstand bilden. Es ist auch möglich, das Sensorelement 25 als sogenanntes Heißfilm-Sensorelement vorzusehen, dessen Aufbau beispielsweise der DE-OS 36 38 138 entnehmbar ist. Derartige Heißfilm-Sensorelemente besitzen ebenfalls auf einem plattenförmigen Substrat aufgebrachte, einzelne Widerstandsschichten, die wenigstens einen temperaturabhängigen Meßwiderstand und beispielsweise wenigstens einen Heizwiderstand umfassen.

Zwischen dem Meßkanal 20 und einem außerhalb des Strömungsquerschnitts 12 am anderen Ende des Grundgehäuses 15 gelegenen Anschlußteil 38 der Vorrichtung 1 ist im Grundgehäuse 15 in einer Grundgehäuseausnehmung 16 eine elektronische Regelschaltung 30 untergebracht, die, wie in der Figur 2 dargestellt ist, mittels beispielsweise in Form von Bonddrähten ausgebildeten Sensoranschlußleitungen 31 mit dem Sensorelement 25 elektrisch verbunden ist. Die Regelschaltung 30 dient bekannterweise zur Versorgung des Sensorelements 25 und zur Auswertung der vom Sensorelement 25 gelieferten elektrischen Signale. Der Aufbau einer derartigen Regelschaltung 30 ist dem Fachmann hinlänglich bekannt und kann beispielsweise der DE-OS 36 38 138 entnommen werden. Die Regelschaltung 30 hat eine Vielzahl elektrischer Bauteile, die üblicherweise in sogenannter Hybridbauweise zu einer Hybridschaltung zusammengefaßt sind. Die Regelschaltung 30 ist in einem metallenen Schutzgehäuse 34 untergebracht, das aus einem metallenen Bodengehäuse 34 und einem metallenen Verschlußgehäuse 50 besteht, die miteinander verbindbar sind. Die Hybridschaltung ist auf einem Hybridträger 17 als integrierte Schichtschaltung aufgetragen und im Ausführungsbeispiel an eine Oberseite 46 einer zum Beispiel rechteckförmigen Grundwand 36 des metallenen Bodengehäuses 35, beispielsweise mittels eines Klebemittels angeklebt.

Das in der Figur 4 in perspektivischer Einzeldarstellung ohne Sensorelement 25 gezeigte Bodengehäuse 35 kann aus einem dünnen Metallstreifen, beispielsweise einem Metallblech hergestellt werden, wobei sich zur Bearbeitung des Metall Streifens Stanz-, Biege-, Falz-, Tiefzieh- oder Prägeverfahren eignen. Ebenfalls kann das Verschlußgehäuse 50 aus einem Metallstreifen mittels Stanz-, Biege-, Falz-, Tiefzieh, oder Prägeverfahren hergestellt werden. Die Grundwand 36 des Bodengehäuses 35 hat zum Beispiel eine etwa rechteckförmige Form, an dessen Oberseite 46 der Hybridträger 17 angeklebt ist. An den längeren Seiten der rechteckförmigen Grundwand 36 stehen jeweils senkrecht von dieser umgebogene, parallel zueinander verlaufende Seitenwände 37 ab, die zur Halterung des zwischen beide Seitenwände 37 des Bodengehäuses 35 einsetzbaren, metallenen Verschlußgehäuses 50 (Figur 1) dienen. An einer Unterseite 45 der Grundwand 36 besitzt das Bodengehäuse 35 beispielsweise vier herausgeprägte, abstehende Haltezapfen 41, die beim Einsetzen des Bodengehäuses 35 in die Grundgehäuseausnehmung 16 des Grundgehäuses 15 in korrespondierend ausgenommene Löcher 49 des Grundgehäuses 15 eingreifen, um so das Bodengehäuse 35 am Grundgehäuse 15 beispielsweise steckbar zu befestigen. Anstelle oder zusätzlich zu den Haltezapfen 41 des Bodengehäuses 35 ist es auch möglich, das Bodengehäuse 35 mittels eines Klebemittels mit dem Grundgehäuse 15 zu verkleben.

Wie in der Figur 4 dargestellt ist, besitzt das Bodengehäuse 35 eine zungenförmige Verlängerung an einer kurzen Seite der rechteckförmigen Grundwand 36, die als Sensorträger 27 ausgebildet zur Halterung des Sensorelements 25 vorgesehen ist. Der Sensorträger 27 und das Bodengehäuse 35 können in einem gemeinsamen Herstellungsprozeß, wie in der Figur 4 dargestellt, oder auch jeweils einzeln hergestellt werden, wofür sich Stanz-, Biege-, Falt-, Tiefzieh- und Prägeverfahren eignen. Nach der beispielsweise erfolgten Einzelherstellung des Sensorträgers 27 und des Bodengehäuses 35 können beide Teile wieder durch geeignete Verbindungsmittel, beispielsweise Laserschweißen, verbunden werden. Der Sensorträger 27 wird in jedem Fall durch Falten eines dünnen Metallstreifens hergestellt. Bei dem in Figur 4 dargestellten Ausführungsbeispiel wird aus der rechteckförmigen, zungenförmigen Verlängerung der Grundwand 36 mittig zu einer Schutzgehäuselängsachse 11 eine Öffnung 62 beispielsweise durch Stanzen ausgenommen. Danach wird um eine parallel zur Schutzgehäuselängsachse 11 liegenden Biegeachse ein Teil der zungenförmigen Verlängerung derart gebogen, daß im Endzustand des gebogenen Metallstreifens etwa zwei gleich große Elemente 56, 57 aneinander anliegen. Im folgenden wird das aus einer Ebene der Grundwand 36 gebogene Element als Halteelement 57 und das in der Ebene verbleibende, nicht gebogene Element mit der öffnung 62 als Rahmenelement 56 bezeichnet. Dabei erstreckt sich das Halteelement 57 unterhalb der Unterseite 45. Wie in der Figur 5, einem Schnitt entlang einer Linie V-V in Figur 4 mit eingebrachtem Sensorelement 25, dargestellt ist, bedeckt das Halteelement 57 im fertig gebogenen Zustand von etwa 180 Grad die Öffnung 62 des nicht gebogenen Rahmenelements 56, um gemeinsam mit dem Halteelement 57 eine Ausnehmung 58 zu begrenzen. Das Rahmenelement 56, beziehungsweise die Ausnehmung 58 hat einen Querschnitt, welcher in etwa der beispielsweise rechteckförmigen, plattenförmigen Form des Sensorelements 25 entspricht und eine Tiefe t, die größer ist als eine quer zur Strömung 9 gemessene Dicke d des Sensorelements 25, um so das Sensorelement 25 vollständig in der Ausnehmung 58 aufzunehmen. Nach dem Falten des Metallstreifens wird das Halteelement 57 mittels eines an einer Außenfläche 61 des Halteelements 57 angreifenden Werkzeugs, beispielsweise eines Prägewerkzeugs verformt, so daß eine verformte Teilfläche einer von der Ausnehmung 58 des Rahmenelements 56 begrenzten Bodenfläche 63 des Halteelements 57 in Form einer plateauförmigen Erhebung 64 etwas in die Ausnehmung 58 des Rahmenelements 56 ragt. Die im Bereich der Öffnung 62 des Rahmenelements 56 ausgebildete, plateauförmige Erhebung 64 hat einen kleineren Querschnitt als ein Querschnitt der Öffnung 62 und des auf die Erhebung 64 aufgesetzten Sensorelements 25. Beim Prägevorgang ist es außerdem möglich, eine oder mehrere Klebsicken 65 in der Bodenfläche 63 auszubilden, die sich rinnenförmig in der Bodenfläche 63, beispielsweise um die plateauförmige Erhebung 64 herum erstrecken. Danach wird beispielsweise durch Prägen eine entlang der Biegeachse verlaufende und eine der Strömungsrichtung 9 zugewandte Seitenfläche 67 des Sensorträgers 27 derart verformt, daß eine um die Biegeachse abgerundete und zur Oberfläche 59 hin abgeflachte Anströmkante 68 erzielt wird. Durch die abgerundete und gegebenenfalls keilförmige Anströmkante 68 erfolgt eine gleichmäßige Anströmung entlang des Sensorelements 25 insbesondere ohne Wirbel- oder Ablösegebiete an der Oberfläche 60 des Sensorelements 25. Auf die plateauförmige Erhebung 64 ist ein Klebemittel aufgetragen, auf welche das Sensorelement 25 in der Ausnehmung 58 aufgesetzt und durch welche das Sensorelement 25 außerhalb seines Sensorbereichs 26 gehalten wird. Dabei kann sich beim Klebvorgang überschüssig aufgetragenes Klebemittel in den aus der Bodenfläche 63 ausgenommenen Klebsicken 65 ansammeln, um das Sensorelement 25 mit gleichbleibender Klebschichtdicke an der plateauförmigen Erhebung 64 anzukleben. Da die Ausarbeitung der plateauförmigen Erhebung 64 erst nach dem Falten des Metallstreifens erfolgt, ist es zudem möglich, diese mit äußerst geringer Toleranz herzustellen, so daß das Sensorelement 25 mit höchster Präzision bündig mit seiner Oberfläche 60 zur Oberfläche 59 des Rahmenelements 56 in die Ausnehmung 58 einklebbar ist. Die Ausbildung der plateauförmigen Erhebung 64 ist derart gestaltet, daß die plateauförmige Erhebung 64 den Sensorbereich 26 des Sensorelements 25 nicht überdeckt, so daß das Sensorelement 25 nur außerhalb seines Sensorbereichs 26 angeklebt wird, wodurch das Sensorelement 25 mit dem Sensorbereich 26 frei und ohne Kontakt zur Bodenfläche 63 in der Ausnehmung 58 untergebracht ist. Hierdurch ergibt sich durch ein Luftpolster zwischen dem Sensorelement 25 und der Bodenfläche 63 eine gute thermische Wärmeisolation des Sensorelements 25 im Halteelement 57. Darüber hinaus ist der Querschnitt der Ausnehmung 58 in Strömungsrichtung 9 etwas größer bemessen als der Querschnitt des Sensorelements 25, so daß sich zwischen dem Sensorelement 25 und der Wandung der Ausnehmung 58 herum ein Luftspalt ergibt, der eine gute thermische Wärmeisolation des Sensorelements 25 im Rahmenelement 56 ermöglicht. Die Höhe der plateauförmigen Erhebung 64 ist so gewählt, daß sich zwischen der Oberfläche 59 des Rahmenelements 56 und der Oberfläche 60 des Sensorelements 25 keine Stufe ergibt.

Zur elektrischen Verbindung der Hybridschaltung am Hybridträger 17 mit einer am Anschlußteil 38 der Vorrichtung 1 ausgebildeten, elektrischen Steckverbindung 39 sind mehrere Anschlußleitungen 54 vorgesehen, die, wie in der Figur 2 dargestellt ist, von der Steckverbindung 39 bis nach außerhalb des Bodengehäuses 35 führen und deren Enden Kontaktstellen 43 im Grundgehäuse 15 bilden. Mittels in U-Form gebogener, beispielsweise von Drähten gebildeten Hybridanschlußleitungen 52 sind die Kontaktstellen 43 mit entsprechenden Kontaktstellen 42 des Hybridträgers 17 elektrisch verbunden. Die Hybridanschlußleitungen 52 werden von außen durch einzelne Durchführkondensatoren 40 hindurch in das Innere des Bodengehäuses 35 zum Hybridträger 17 geführt und an ihren jeweiligen Drahtenden mit den Kontaktstellen 42 des Hybridträgers 17 und mit den Kontaktstellen 43 im Grundgehäuse 15, beispielsweise durch Löten oder Laserschweißen, elektrisch kontaktiert. Die einzelnen Durchführkondensatoren 40 sind in einem gemeinsamen Steckteil 47 in vorgesehene Öffnungen untergebracht und dort beispielsweise durch eine Lötverbindung gehalten und mit dem Steckteil 47 elektrisch verbunden. Zum Einbau des Steckteils 47 in das Bodengehäuse 35 sind jeweils an den Seitenwänden 37 des Bodengehäuses 35 beispielsweise zwei Federelemente 70 vorgesehen, zwischen denen das Steckteil 47 zwischen die Seitenwände 37 des Bodengehäuses 35 steckbar eingeführt wird, wonach das Steckteil 47 eine der Steckverbindung 39 zugewandte, metallene Vorderwand des Bodengehäuses 35 bildet. Die Federelemente 70 werden bei der Herstellung des Bodengehäuses 35 in einem Stanz- und Biegevorgang an den Seitenwänden 37 ins Innere des Bodengehäuses 35 weisend mit angeformt. Beim Herstellen des Steckteils 47 wird dieses mit den einzelnen, rohrförmigen Durchführkondensatoren 40 bestückt, wonach die Hybridanschlußleitungen 52 in die Durchführkondensatoren 40 eingeführt und beispielsweise durch eine Lötverbindung gehalten und elektrisch kontaktiert werden. Danach können die Hybridanschlußleitungen 42 in U-Form gebogen werden, so daß das Steckteil 47 in einfacher Art und Weise als separates Steckmodul in das Bodengehäuse 35 eingeschoben und von den Federelementen 70 gehalten wird, wobei sich über die Federelemente 70 eine Masseverbindung vom Steckteil 47 zum Bodengehäuse 35 ergibt. Nach dem Einsetzen des Steckteils 47 können die Hybridanschlußleitungen 52 an ihren jeweiligen Drahtenden an den Kontaktstellen 42 des Hybridträgers 17 und an den Kontaktstellen 43 im Grundgehäuse 15, beispielsweise durch Löten oder Bonden, elektrisch kontaktiert werden. Von den am Grundgehäuse 15 vorgesehenen Kontaktstellen 43 führen die elektrischen Anschlußleitungen 54 innerhalb des Grundgehäuses 15 zur Steckverbindung 39, die im Ausführungsbeispiel beispielsweise als Steckeranschluß ausgebildet ist. Zur elektrischen Verbindung der Regelschaltung 30 wird ein elektrischer Stecker auf den Steckeranschluß aufgesetzt, der mit einem nicht dargestellten, elektronischen Steuergerät verbunden ist, das die von der Regelschaltung 30 bereitgestellten, elektrischen Signale auswertet, um damit beispielsweise eine Motorleistungssteuerung der Brennkraftmaschine durchzuführen.

Das Verschlußgehäuse 50 ist zur Abdeckung des Bodengehäuses 35 und des Hybridträgers 17 vorgesehen und umgreift, wie in der Figur 1 dargestellt ist, das Steckteil 47 mit spangenartig ausgebildeten Federelementen 72. Die Federelemente 72 bedecken dabei nur teilweise eine der Steckverbindung 39 zugewandte Vorderfläche 75 und eine dem Hybridträger 17 zugewandte Rückfläche 76 des Steckteils 47, um durch einen federnden Kontakt eine Masseverbindung vom Verschlußgehäuse 50 zum Steckteil 47 und von diesem über die Federelemente 70 zum Bodengehäuse 35 zu erhalten. Darüber hinaus besitzt das Verschlußgehäuse 50 an seinen zwei längeren Seiten seiner rechteckförmigen Grundfläche 78 zwei abstehende Seitenwände 79, die zum Beispiel mittels mehrerer Schlitze in mehrere Federelemente 73 unterteilt sind. Die Federelemente 73 werden beim Herstellen des Verschlußgehäuses 50 zum Beispiel etwas nach außen verspreizt, so daß diese, wie in der Figur 3, einer Schnittdarstellung entlang einer Linie III-III, dargestellt ist, im montierten Zustand nach dem Einsetzen des Verschlußgehäuses 50 in das Bodengehäuse 35 an den Seitenwänden 37 des Bodengehäuses 35 federnd anliegen.

Das aus Bodengehäuse 35, Verschlußgehäuse 50 und beispielsweise Steckteil 47 gebildete Schutzgehäuse 34 umgibt die Hybridschaltung allseits, um die Regelschaltung 30 insbesondere gegen einstrahlende elektromagnetische Wellen zu schützen. Das mit den Durchführkondensatoren 40 bestückte Steckteil 47 stellt dabei sicher, daß über die Anschlußleitungen 54 und die Hybridanschlußleitungen 52 keine elektromagnetischen Wellen zur Hybridschaltung gelangen, sondern von den Durchführkondensatoren 40 ausgefiltert werden. Darüber hinaus wird durch das metallene Bodengehäuse 35 und das metallene Verschlußgehäuse 50 ein Abstrahlen elektromagnetischer Wellen vermieden, die von der Regelschaltung 30 ausgehen können, so daß auch in unmittelbarer Nähe der Vorrichtung 1 angeordnete, elektrische Systeme unbeeinflußt von der Vorrichtung 1 arbeiten können. Ist gegebenenfalls kein derartiger Entstörschutz mit den Durchführkondensatoren 40 erwünscht, so kann das Steckteil 47, ohne daß aufwendige konstruktive Änderungen am Bodengehäuse 35 notwendig sind, einfach weggelassen werden. Es ist nur erforderlich, die Kontaktstellen 43 im Grundgehäuse 15 mit den Kontaktstellen 42 des Hybridträgers 17, beispielsweise durch Bonden, Löten oder Laserschweißen, elektrisch miteinander zu verbinden.

Aus Verschmutzungsgründen ist das Verschlußgehäuse 50 noch von einer aus Kunststoff hergestellten Abdeckung 80 bedeckt, die, wie in der Figur 1 dargestellt ist, zum Beispiel in eine um die Grundgehäuseausnehmung 16 umlaufende Nut 81 des Grundgehäuses 35 einsteckbar ist. Die Abdeckung 80 ist der besseren Übersicht wegen in der Figur 2 nicht dargestellt. Zur Kompensation des Meßwertes des Sensorelements 25 bezüglich der Temperatur des strömenden Mediums besitzt die Vorrichtung 1 einen Widerstand, der im folgenden als Mediumtemperaturwiderstand 86 bezeichnet wird. Der Mediumtemperaturwiderstand 86 ist zum Beispiel ein Teil der Regelschaltung 30, die gewährleistet, daß sich Änderungen der Temperatur des strömenden Mediums nicht auf die Meßgenauigkeit des Vorrichtung 1 auswirken. Es ist auch möglich, anstelle oder zusätzlich zur elektrischen Verbindung des Mediumtemperaturwiderstandes 86 mit der Regelschaltung 30, den Mediumtemperaturwiderstand 86 mittels einer elektrischen Anschlußleitung im Grundgehäuse 15 und eines zusätzlichen Kontaktpins in der Steckverbindung 39 von dem auf die Steckverbindung 39 aufsetzbaren Stecker separat zu kontaktieren, so daß dieser auch mit weiteren Steuerungsschaltungen der Brennkraftmaschine, beziehungsweise mit dem elektronischen Steuergerät, verbunden werden kann. Der Mediumtemperaturwiderstand 86 hat einen von der Temperatur abhängigen Widerstandswert. Dabei kann der Mediumtemperaturwiderstand 86 als NTC- oder PTC-Widerstand ausgebildet sein und beispielsweise einen Widerstand in Form eines Drahtes, eines Films oder einer Folie aufweisen. Der Mediumtemperaturwiderstand 86 ist außerhalb des Meßkanals 20 an einer in etwa parallel zur Längsachse 10 verlaufenden Außenfläche 84 des Grundgehäuses 15 mit Abstand zur Außenfläche 84 angeordnet. Dabei erstreckt sich das Grundgehäuse 15 im Bereich des Mediumtemperaturwiderstandes 86 senkrecht zur Längsachse 10 auf seiner dem Mediumtemperaturwiderstand 86 zugewandten Seite nur bis zur Außenfläche 84. Der außerhalb des Grundgehäuses 15 untergebrachte Mediumtemperaturwiderstand 86 hat zur elektrischen Kontaktierung nebeneinander angeordnete Anschlußdrähte 92, 93, von denen wenigstens einer 93 in U-Form so gebogen ist, daß er teilweise parallel zum anderen Anschlußdraht 92 verläuft. Die Anschlußdrähte 92, 93 sind an zwei in Form von Kontaktstiften ausgebildeten, elektrischen Halterungen 88 beispielsweise durch Löten befestigt und mit den Anschlußdrähten 92, 93 elektrisch verbunden. Die Halterungen 88 ragen etwa gegenüberliegend dem Steckteil 47 des Bodengehäuses 35 aus der Außenfläche 80 des Grundgehäuses 15 in den Strömungsquerschnitt 12 heraus und liegen in Strömungsrichtung 9 hintereinander. Zur weiteren Halterung des Mediumtemperaturwiderstandes 86 ist am Grundgehäuse 15 eine von der Außenfläche 84 abstehende Kunststoffnase 89 vorgesehen, um welche der wenigstens eine gebogene Anschlußdraht 93 an einer den Halterungen 88 abgewandten Seite der Kunststoffnase 89 in einer Nut verläuft, so daß der Mediumtemperaturwiderstand 86 durch die Anschlußdrähte _{.} 92, 93 mit Abstand zur Außenfläche 84 des Grundgehäuses 15 im strömenden Medium angeordnet ist. Das Anbringen des Mediumtemperaturwiderstandes 86 außerhalb des Meßkanals 20 am Grundgehäuse 15 bietet den Vorteil, daß durch einen räumlichen Abstand des Mediumtemperaturwiderstandes 86 einerseits zum Sensorelement 25 und andererseits zur Hybridschaltung des Hybridträgers 17 eine thermische Beeinflussung des Mediumtemperaturwiderstandes 86 ausgeschlossen ist. Außerdem ist der Mediumtemperaturwiderstand 86 außerhalb des Grundgehäuses 15 keiner Strömungsbeeinflussung ausgesetzt, die beispielsweise von Begrenzungswänden des Meßkanals 20 ausgeht, so daß dieser ungestört die Temperatur des strömenden Mediums annehmen kann.

Wie in der Figur 3 dargestellt ist, ist zwischen dem Meßkanal 20 und der Kunststoffnase 89 ein in Strömungsrichtung 9 verlaufender Kühlkanal 90 vorgesehen, der zur Kühlung der Regelschaltung 30 dient und der die thermische Entkopplung des Mediumtemperaturwiderstandes 86 einerseits zum Sensorelement 25 und andererseits zur Regelschaltung 30 weiter verbessert. Der Kühlkanal 90 erstreckt sich in etwa parallel zur Strömungsrichtung 9 des strömenden Mediums, quer durch das Grundgehäuse 15 hindurch, wobei die Unterseite 45 des Bodengehäuses 35 teilweise vom Kunststoff des Grundgehäuses 15 befreit ist. Durch die teilweise kunststofffreie Unterseite 45 kann die von der Regelschaltung 30 abgegebene Wärme über den Hybridträger 17 zum Bodengehäuse 35 und zum Kühlkanal 90 abfließen, wodurch eine Erwärmung des Sensorelements 25 und des Mediumtemperaturwiderstandes 86 durch von der Regelschaltung 30. abgegebener Wärme vermieden wird. Der Kühlkanal 90 hat zum Beispiel einen etwa rechteckförmigen Eintrittsquerschnitt, der sich in Strömungsrichtung 9 zur Mitte der Vorrichtung 1 zu einem kleinsten Querschnitt verjüngt und sich weiter in Strömungsrichtung 9 wieder vergrößert, um mit einem rechteckförmigen Austrittsquerschnitt, dessen Größe dem Eintrittsquerschnitt entspricht, zu enden. Die Ausbildung des Kühlkanals 90 gewissermaßen in Form einer halbseitigen Lavaldüse bewirkt, daß das strömende Medium vom Eintrittsquerschnitt zur Unterseite 45 des Bodengehäuses 35 hin beschleunigt wird, um durch eine vergrößerte Geschwindigkeit an der Unterseite 45 des Bodengehäuses 35 die Wärmeabfuhr von der Regelschaltung 30 zum strömenden Medium zu erhöhen.

## Patentansprüche

1. Vorrichtung zur Messung der Masse eines strömenden Mediums, insbesondere zur Messung der Ansaugluftmasse von Brennkraftmaschinen, mit einem langgestreckten Gehäusek (15) mit einer Längsachse, das einen vom Medium durchströmten Meßkanal hat, in dem ein temperaturabhängiges Sensorelement (25) in dem strömenden Medium angeordnet ist, das wenigstens einen temperaturabhängigen Meßwiderstand hat, wobei zur Kompensation der Temperatur des strömenden Mediums ein temperaturabhängiger Mediumtemperaturwiderstand vorgesehen ist, **dadurch gekennzeichnet, daß** der Mediumtemperaturwiderstand (86) außerhalb des Meßkanals (20) an einer in etwa parallel zur Längsachse (10) verlaufenden Außenfläche (64) des Gehäuses (15) mit Abstand zur Außenfläche (84) angeordnet ist und sich das Gehäuse (15) senkrecht zur Längsachse (10) auf seiner dem Mediumtemperaturwiderstand (86) zugewandten Seite im Bereich des Mediumtemperaturwiderstandes (86) nur bis zur Außenfläche (84) erstreckt.

2. Vorrichtung nach Anspruch 1, **dadurch gekennzeichnet, daß** am Gehäuse (15) elektrische Halterungen (88) vorgesehen und mit den Halterungen (88) elektrische Anschlußdrähte (92, 93) des Mediumtemperaturwiderstandes (86) verbunden sind.

3. Vorrichtung nach Anspruch 2, **dadurch gekennzeichnet, daß** wenigstens einer der elektrischen Anschlußdrähte (93) eine U-Form hat und die Halterungen (88) in Richtung des strömenden Mediums hintereinanderliegen.

4. Vorrichtung nach Anspruch 3, **dadurch gekennzeichnet, daß** das Gehäuse (15) eine Nase (89) hat und der wenigstens eine Anschlußdraht (93) um die den Halterungen (88) abgewandte Seite der Nase (89) verläuft.

5. Vorrichtung nach Anspruch 1, **dadurch gekennzeichnet, daß** der Mediumtemperaturwiderstand (86) mit einer elektronischen Regelschaltung (30) des Sensorelements (25) verbunden ist.

6. Vorrichtung nach Anspruch 1, **dadurch gekennzeichnet, daß** der Mediumtemperaturwiderstand (86) mit einer am Gehäuse (15) vorgesehenen, elektrischen Steckverbindung (39) verbunden ist.

## Claims

1. Device for measuring the mass of a flowing medium, in particular for measuring the intake air mass of internal combustion engines, having an elongate housing (15) having a longitudinal axis, which housing has a measurement channel through which the medium flows and in which a temperature-dependent sensor element (25) is arranged in the flowing medium, which element has at least one temperature-dependent measuring resistor, a temperature-dependent medium temperature resistor being provided in order to compensate for the temperature of the flowing medium, **characterized in that** the medium temperature resistor (86) is arranged outside the measurement channel (20) at an outer area (84) of the housing (15), the said outer area running approximately parallel to the longitudinal axis (10), at a distance from the outer area (84) and the housing (15) extends perpendicularly to the longitudinal axis (10) on its side facing the medium temperature resistor (86), in the region of the medium temperature resistor (86), only as far as the outer area (84).

2. Device according to Claim 1, **characterized in that** electrical retainers (88) are provided on the housing (15) and electrical connecting wires (92, 93) of the medium temperature resistor (86) are connected to the retainers (88).

3. Device according to Claim 2, **characterized in that** at least one of the electrical connecting wires (93) has a U-shape and the retainers (88) lie one after the other in the direction of the flowing medium.

4. Device according to Claim 3, **characterized in that** the housing (15) has a lug (89) and the at least one connecting wire (93) runs around that side of the lug (89) which is remote from the retainers (88).

5. Device according to Claim 4, **characterized in that** the medium temperature resistor (86) is connected to an electronic control circuit (30) of the sensor element (25).

6. Device according to Claim 1, **characterized in that** the medium temperature resistor (86) is connected to an electrical plug connection (39) provided on the housing (15).

## Revendications

1. Dispositif pour mesurer la masse d'un milieu en écoulement, notamment pour mesurer la masse d'air aspiré par un moteur à combustion interne, comportant un boîtier allongé (15) avec un axe longitudinal comportant un canal de mesure traversé par le milieu et dans lequel est logé un élément de capteur (25) dépendant de la température, pénétrant dans le milieu en écoulement, cet élément ayant au moins une résistance de mesure dépendant de la température, alors que pour compenser la température du milieu en écoulement il est prévu une résistance de température de milieu dépendant de la température,
**caractérisé en ce que**
la résistance de température de milieu (86) est prévue à l'extérieur du canal de mesure (20) sur une surface extérieure (84) du boîtier (15) qui est sensiblement parallèle à l'axe longitudinal (10), et distante de la surface extérieure (84), et perpendiculairement à l'axe longitudinal (10) sur son côté tourné vers la résistance de température de milieu (86) le boîtier (15) s'étend au niveau de cette résistance (86) seulement jusqu'à la surface extérieure (84).

2. Dispositif selon la revendication 1,
**caractérisé par**
des fixations électriques (88) prévues sur le boîtier (15) avec des fils de branchement électriques (92, 93) de la résistance de température de milieu (86) reliés aux fixations (88).

3. Dispositif selon la revendication 2,
**caractérisé en ce qu'**
au moins l'un des fils de branchement électriques (93) a une forme en U et les fixations (88) sont placées l'une derrière l'autre en direction du milieu en écoulement.

4. Dispositif selon la revendication 3,
**caractérisé en ce que**
le boîtier (15) comporte un bec (89) et au moins un fil de branchement (93) passe du côté du bec (89) à l'opposé des fixations (88).

5. Dispositif selon la revendication 1,
**caractérisé en ce que**
la résistance de température du milieu (86) est reliée à un circuit de régulation électronique (30) de l'élément de capteur (25).

6. Dispositif selon la revendication 1,
**caractérisé en ce que**
la résistance de température du milieu (86) est reliée à une connexion électrique (39) prévue sur le boîtier (15).
